# FASCICULE DE BREVET EUROPEEN

(11) **EP 3 630 512 B1**
(45) Date de publication et mention de la délivrance du brevet: **05.05.2021**
(21) Numéro de dépôt: 18728834.5
(22) Date de dépôt: 25.05.2018
(51) Int. Cl.: B60H 1/00, B60H 1/32, F24D 19/10

(54) **PROCEDE DE GESTION D'UN CIRCUIT DE CLIMATISATION INVERSIBLE DE VEHICULE AUTOMOBILE**
VERFAHREN ZUR VERWALTUNG EINES REVERSIBLEN KLIMAANLAGENKREISLAUFS EINES KRAFTFAHRZEUGS
METHOD FOR MANAGING A REVERSIBLE AIR-CONDITIONING CIRCUIT OF A MOTOR VEHICLE

(30) Priorité: 29.05.2017 FR 1754703
(43) Date de publication de la demande: 08.04.2020
(73) Titulaire: Valeo Systemes Thermiques, 78322 Le Mesnil Saint-Denis Cedex (FR)
(72) Inventeur: LIU, Jin-Ming, 78322 Le Mesnil Saint-Denis Cedex (FR); BEAUVIS, Régis, 78322 Le Mesnil Saint-Denis Cedex (FR); BENOUALI, Jugurtha, 78322 Le Mesnil Saint-Denis Cedex (FR)
(74) Mandataire: Tran, Chi-Hai
(86) Numéro de dépôt international: PCT/EP2018/063843
(87) Numéro de publication internationale: WO 2018/219830

(56) Documents cités:
- DE-T5-112012 000 758
- US-A1- 2005 178 523
- US-A1- 2010 326 127
- US-A1- 2015 102 118

## Description

L'invention se rapporte au domaine des véhicules automobiles et plus particulièrement à un circuit de climatisation de véhicule automobile et son procédé de gestion en mode pompe à chaleur.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est à dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (comme par exemple un fluide réfrigérant d'une part et de l'eau glycolée d'autre part) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Un circuit de climatisation connu est divulgué par le document DE 11 2012 000758 T5.

Un tel circuit de climatisation permet une utilisation selon différents modes de fonctionnement cependant pour passer d'un mode de fonctionnement à un autre, il est généralement obligatoire de stopper le flux de fluide réfrigérant et d'attendre que les différentes pressions s'équilibrent pour ensuite redémarrer dans le mode de fonctionnement souhaité. Un tel arrêt du circuit de climatisation peut entraîner un certain inconfort pour le ou les utilisateurs présents dans l'habitacle du véhicule automobile.

Un des buts de la présente invention est donc de remédier au moins partiellement aux inconvénients de l'art antérieur et de proposer un procédé de gestion d'un circuit de climatisation inversible amélioré pour le passage d'un mode de fonctionnement à un autre.

La présente invention concerne donc un procédé de gestion d'un circuit de climatisation inversible, ledit circuit étant apte à fonctionner selon :
∘ un mode de refroidissement où un flux d'air intérieur à destination de l'habitacle est refroidi, l'énergie calorifique récupérée du flux d'air intérieur étant rejetée dans un flux d'air extérieur au véhicule automobile,
∘ un premier mode de déshumidification, dérivé du mode de refroidissement et où le flux d'air intérieur est refroidi puis réchauffé avant d'arriver dans l'habitacle,
∘ un mode pompe à chaleur où le flux d'air intérieur est réchauffé, l'énergie calorifique réchauffant le flux d'air intérieur étant récupérée du flux d'air extérieur, et
∘ un deuxième mode de déshumidification, dérivé du mode pompe à chaleur et où le flux d'air intérieur est refroidi puis réchauffé avant d'arriver dans l'habitacle,
le circuit de climatisation inversible comportant une unité centrale de contrôle apte à piloter le passage d'un mode de fonctionnement à un autre selon une trame de transition de mode qui passe :
∘ dans un premier sens, par le mode de refroidissement, le premier mode de déshumidification, le deuxième mode de déshumidification, puis par le mode pompe à chaleur, et
∘ dans un deuxième sens, par le mode pompe à chaleur, le deuxième mode de déshumidification, le premier mode de déshumidification, puis par le mode de refroidissement.

Selon un aspect de l'invention, l'unité centrale de contrôle est apte à piloter le compresseur et, afin de passer d'un mode de fonctionnement à un autre dans le deuxième sens de la trame de transition, l'unité centrale de contrôle mesure et calcule la différence de pression du fluide réfrigérant de part et d'autre des vannes d'arrêt entrant enjeu dans le changement de mode de fonctionnement,
si cette différence de pression est inférieure à un seuil prédéterminé, l'unité centrale de contrôle peut piloter le passage d'un mode de fonctionnement à l'autre,
si cette différence de pression est supérieure au seuil prédéterminé, l'unité centrale de contrôle pilote le compresseur de sorte à diminuer ladite différence de pression.

Selon un autre aspect de l'invention, lors du passage d'un mode de fonctionnement à un autre, l'unité centrale de contrôle commande dans un premier temps les vannes d'arrêt à ouvrir et dans un second temps les vannes d'arrêt à fermer.

Selon un autre aspect de l'invention, le seuil prédéterminé de la différence de pression est de 4 bars.

Selon un autre aspect de l'invention, le procédé de gestion comporte les étapes suivantes :
∘ réception par l'unité centrale de contrôle d'une requête afin d'atteindre un mode de fonctionnement,
∘ si le mode de fonctionnement actuel diffère du mode de fonctionnement demandé, l'unité centrale de contrôle vérifie la place du mode de fonctionnement demandé par rapport au mode de fonctionnement actuel dans la trame de transition et passe au mode de fonctionnement suivant dans ladite trame de transition, jusqu'à atteindre le mode de fonctionnement demandé.

Selon un autre aspect de l'invention, le circuit de climatisation inversible comporte :
∘ une première boucle de fluide réfrigérant comportant dans le sens de circulation du fluide réfrigérant :
▪ un compresseur,
▪ un échangeur de chaleur bifluide,
▪ un premier dispositif de détente,
▪ un premier échangeur de chaleur destiné à être traversé par un flux d'air intérieur,
▪ un deuxième dispositif de détente,
▪ un deuxième échangeur de chaleur destiné à être traversé par un flux d'air extérieur, et
▪ une branche de contournement du deuxième échangeur de chaleur ledit circuit de climatisation inversible comportant :
   ∘ une deuxième boucle de fluide caloporteur comportant
   ▪ l'échangeur de chaleur bifluide, ledit échangeur de chaleur bifluide étant agencé conjointement sur la première boucle de fluide réfrigérant et sur la deuxième boucle de fluide caloporteur de façon à permettre les échanges de chaleur entre la première boucle de fluide réfrigérant et la deuxième boucle de fluide caloporteur,
   ▪ un troisième échangeur de chaleur destiné à être traversé par le flux d'air intérieur, et
   ▪ un quatrième échangeur de chaleur destiné à être traversé par un flux d'air extérieur,
   le procédé de gestion étant tel que
   lors du mode de refroidissement :
   ▪ le fluide réfrigérant passe successivement dans le compresseur où il passe à haute pression, l'échangeur de chaleur bifluide, le premier dispositif de détente où il passe à basse pression, le premier échangeur de chaleur et dans la branche de contournement avant de rejoindre le compresseur,
   ▪ les échanges d'énergie calorifique entre le fluide caloporteur et le flux d'air intérieur sont bloqués et l'énergie calorifique évacuée au niveau du quatrième échangeur de chaleur dans le flux d'air extérieur,
   lors du mode pompe à chaleur :
   ▪ le fluide réfrigérant passe successivement dans le compresseur où il passe à haute pression, l'échangeur de chaleur bifluide, le premier dispositif de détente où il passe à une pression intermédiaire, le premier échangeur de chaleur, le deuxième dispositif de détente où il passe à basse pression, et dans le deuxième échangeur de chaleur avant de rejoindre le compresseur,
   ▪ les échanges d'énergie calorifique entre le fluide caloporteur et le flux d'air extérieur sont bloqués et l'énergie calorifique évacuée au niveau du troisième échangeur de chaleur dans le flux d'air intérieur,
   le premier mode de déshumidification différant du mode de refroidissement par le fait que le fluide caloporteur peut évacuer de l'énergie calorifique également au niveau du troisième échangeur de chaleur dans le flux d'air intérieur, et
   le deuxième mode de déshumidification différant du mode pompe à chaleur
   par le fait que :
   ▪ le fluide réfrigérant traverse le premier dispositif de détente où il passe à basse pression et traverse le deuxième dispositif de détente sans perte de pression,
   ▪ le fluide caloporteur peut évacuer de l'énergie calorifique également au niveau du quatrième échangeur de chaleur dans le flux d'air extérieur.

Selon un autre aspect de l'invention, le circuit de climatisation inversible comporte, reliés à ladite unité centrale de contrôle :
∘ un capteur de pression du fluide réfrigérant à pression intermédiaire, disposé en aval du premier échangeur de chaleur, entre ledit premier échangeur de chaleur et la branche de contournement, et
∘ un capteur de pression du fluide réfrigérant à basse pression, disposé en aval du deuxième échangeur de chaleur, entre ledit deuxième échangeur de chaleur et le compresseur,
   et que, afin de passer d'un mode de fonctionnement à un autre dans le deuxième sens de la trame de transition, l'unité centrale de contrôle mesure et calcule la différence de pression du fluide réfrigérant entre la pression mesurée au niveau du capteur de pression du fluide réfrigérant à pression intermédiaire et du capteur de pression du fluide réfrigérant à basse pression.

Selon un autre aspect de l'invention, lors du passage du deuxième mode de déshumidification au mode pompe à chaleur, le flux d'air intérieur est redirigé au moyen d'un dispositif de chauffage, ventilation et climatisation vers la partie inférieure ou médiane de l'habitacle.

Selon un autre aspect de l'invention :
∘ lors du passage du premier mode déshumidification au deuxième mode de déshumidification,
   ▪ dans un premier temps, une première vanne d'arrêt, disposée en amont du deuxième dispositif de détente est ouverte et une vanne d'arrêt de contournement du deuxième dispositif de détente est ouverte, de sorte que le fluide réfrigérant puisse contourner le deuxième dispositif de détente, ou ledit deuxième dispositif de détente est ouvert complètement de sorte que le fluide réfrigérant puisse le traverser sans perte de pression, et
   ▪ dans un deuxième temps une deuxième vanne d'arrêt, disposée sur la branche de contournement, est fermée,
∘ lors du passage du deuxième mode déshumidification au premier mode de déshumidification,
   ▪ dans un premier temps la deuxième vanne d'arrêt est ouverte, et
   ▪ dans un deuxième temps, la première vanne d'arrêt est fermée ou la vanne d'arrêt de contournement et le deuxième dispositif de détente sont fermés.

Selon un autre aspect de l'invention:
∘ lors du passage du deuxième mode déshumidification au mode pompe à chaleur, une vanne d'arrêt de contournement, disposée sur une conduite de dérivation dudit deuxième dispositif de détente est fermée,
∘ lors du passage du mode pompe à chaleur au deuxième mode de déshumidification, la vanne d'arrêt de contournement est ouverte ou ledit deuxième dispositif de détente est ouvert complètement de sorte que le fluide réfrigérant puisse le traverser sans perte de pression.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible selon un premier mode de réalisation,
- la figure 2 montre une représentation schématique d'un circuit de climatisation inversible selon un deuxième mode de réalisation,
- la figure 3 montre une représentation schématique d'un circuit de climatisation inversible selon un troisième mode de réalisation,
- la figures 4 montre une représentation schématique d'un dispositif de détente selon un autre modes de réalisation,
- la figure 5 montre une représentation schématique de la deuxième boucle de fluide caloporteur du circuit de climatisation inversible des figures 1 à 3, selon un mode de réalisation alternatif,
- la figure 6a montre le circuit de climatisation inversible de la figure 1 selon un mode de refroidissement,
- la figure 6b montre un diagramme pression / enthalpie du mode de refroidissement illustré à la figure 6a,
- la figure 7a montre le circuit de climatisation inversible de la figure 1 selon un premier mode de déshumidification,
- la figure 7b montre un diagramme pression / enthalpie du premier mode de déshumidification illustré à la figure 7a,
- la figure 8a montre le circuit de climatisation inversible de la figure 1 selon un mode pompe à chaleur,
- la figure 8b montre un diagramme pression / enthalpie du mode pompe à chaleur illustré à la figure 8a,
- la figure 9a montre le circuit de climatisation inversible de la figure 1 selon un deuxième mode de déshumidification,
- la figure 9b montre un diagramme pression / enthalpie du premier mode de déshumidification illustré à la figure 9a,
- la figure 10 montre un logigramme d'un procédé de gestion du circuit de climatisation inversible pour le passage d'un mode de fonctionnement à un autre.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

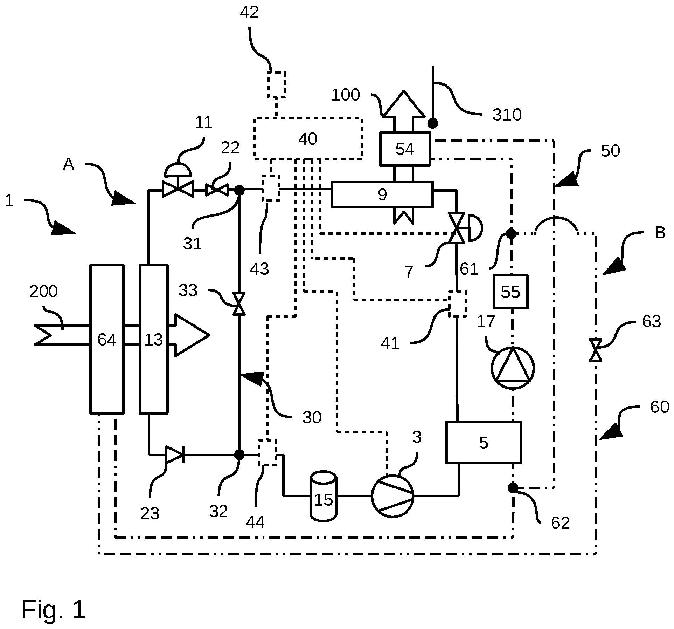

La présente invention concerne un procédé de gestion d'un circuit de climatisation inversible 1 dans lequel circule un fluide réfrigérant, par exemple tel qu'illustré aux figures 1 à 3. Ce procédé de gestion concerne plus particulièrement le passage d'un mode de fonctionnement à un autre pour un tel circuit de climatisation inversible 1.

Ce circuit de climatisation inversible 1 est notamment apte à fonctionner selon un mode de refroidissement dans lequel un flux d'air intérieur 100 à destination de l'habitacle est refroidit. Lors de ce mode de refroidissement, l'énergie calorifique récupérée du flux d'air intérieur 100 est rejetée dans un flux d'air extérieur 200 au véhicule automobile.

Le circuit de climatisation inversible 1 est apte à fonctionner selon un premier mode de déshumidification, dérivé du mode de refroidissement, dans lequel le flux d'air intérieur 100 est refroidit puis réchauffer avant d'arriver dans l'habitacle.

Le circuit de climatisation inversible 1 est également apte à fonctionner selon un mode pompe à chaleur dans lequel le flux d'air intérieur 100 est réchauffé. L'énergie calorifique réchauffant le flux d'air intérieur 100 est récupérée du flux d'air extérieur 200.

Le circuit de climatisation inversible 1 est apte à fonctionner selon un deuxième mode de déshumidification, dérivé du mode pompe à chaleur, dans lequel le flux d'air intérieur 100 est refroidit puis réchauffer avant d'arriver dans l'habitacle.

Le circuit de climatisation inversible 1 comporte une unité centrale de contrôle 40 apte à piloter le passage d'un mode de fonctionnement à un autre selon une trame de transition de mode qui passe :
∘ dans un premier sens, par le mode de refroidissement, le premier mode de déshumidification, le deuxième mode de déshumidification, puis par le mode pompe à chaleur, et
∘ dans un deuxième sens, par le mode pompe à chaleur, le deuxième mode de déshumidification, le premier mode de déshumidification, puis par le mode de refroidissement.

Le fait de suivre cette trame de transition de mode permet de passer d'un mode de fonctionnement à un autre et plus précisément à un mode de fonctionnement souhaité, sans qu'il y ait d'arrêt d'un élément, tel qu'un compresseur 3, et d'attente d'équilibrage des différentes pressions du fluide réfrigérant au sein du circuit de climatisation inversible 1.

L'unité centrale de contrôle 40 est notamment apte à piloter le compresseur 3 et, afin de passer d'un mode de fonctionnement à un autre dans le deuxième sens de la trame de transition, l'unité centrale de contrôle 40 mesure et calcule la différence de pression du fluide réfrigérant de part et d'autre des vannes d'arrêt entrant en jeu dans le changement de mode de fonctionnement.

Si cette différence de pressions est inférieure à un seuil prédéterminé, l'unité centrale de contrôle 40 peut piloter le passage d'un mode de fonctionnement à l'autre.

Si cette différence de pression est supérieure au seuil prédéterminé, l'unité centrale de contrôle 40 pilote le compresseur 3 de sorte à diminuer ladite différence de pressions.

Ce seuil prédéterminé peut notamment être choisi en fonction de la résistance des différentes vannes d'arrêt pour leur passage d'un état ouvert à fermé et inversement. Ce seuil prédéterminé peut ainsi généralement être de l'ordre de 4 bars. Cela permet ainsi de ne pas détériorer les vannes d'arrêt lors du passage d'un mode de fonctionnement à un autre dans le deuxième sens de la trame de transition.

Afin d'éviter que le fluide réfrigérant soit bloqué alors que le compresseur 3 est en marche et donc éviter une augmentation de la pression lors du passage d'un mode de fonctionnement à un autre, l'unité centrale de contrôle 40 commande dans un premier temps les vannes d'arrêt à ouvrir et dans un second temps les vannes d'arrêt à fermer.

Le procédé de gestion comporte plus particulièrement les étapes suivantes :
- réception par l'unité centrale de contrôle 40 d'une requête afin d'atteindre un mode de fonctionnement,
- si le mode de fonctionnement actuel diffère du mode de fonctionnement demandé, l'unité centrale de contrôle 40 vérifie la place du mode de fonctionnement demandé par rapport au mode de fonctionnement actuel dans la trame de transition et passe au mode de fonctionnement suivant dans ladite trame de transition, jusqu'à atteindre le mode de fonctionnement demandé.

La figure 1 montre un circuit de climatisation inversible 1 indirect pour véhicule automobile qui est apte à fonctionner selon les différents modes de fonctionnement. Ce circuit de climatisation inversible 1 indirect comporte notamment :
- une première boucle de fluide réfrigérant A dans laquelle circule un fluide réfrigérant,
- une deuxième boucle de fluide caloporteur B dans laquelle circule un fluide caloporteur, et
- un échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A, représentée en trait plein sur les différentes figures, comporte plus particulièrement dans le sens de circulation du fluide réfrigérant :
∘ un compresseur 3,
∘ l'échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une conduite de contournement 30 du deuxième échangeur de chaleur 13.

La conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et l'orifice tube 11. Il est cependant tout à fait possible d'imaginer que le premier point de raccordement 31 soit disposé entre l'orifice tube 11 et le deuxième échangeur de chaleur 13 du moment que le fluide réfrigérant a la possibilité de contourner ledit orifice tube 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

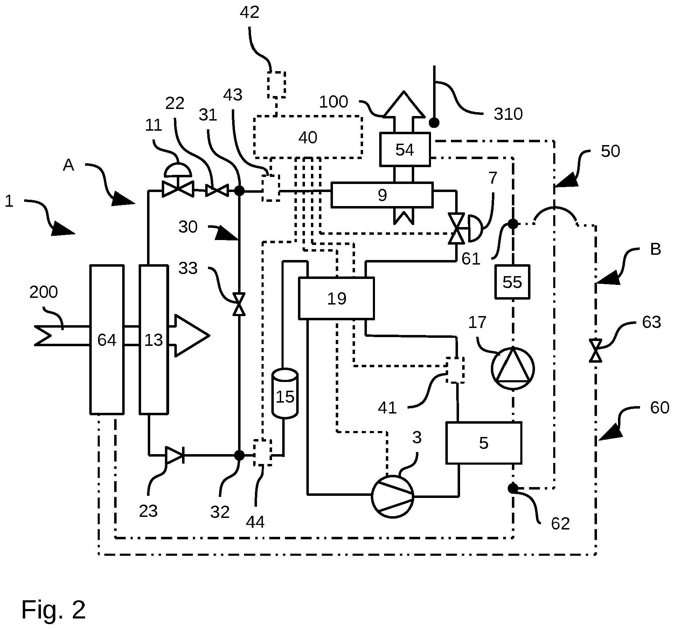

Comme illustré sur la figure 2, la première boucle de fluide réfrigérant A peut également comporter un premier échangeur de chaleur interne 19 (IHX pour « internal heat exchanger ») permettant un échange de chaleur entre le fluide réfrigérant à haute pression en sortie de l'échangeur de chaleur bifluide 5 et le fluide réfrigérant à basse pression en sortie du deuxième échangeur de chaleur 13 ou de la conduite de contournement 30. Ce premier échangeur de chaleur interne 19 comporte notamment une entrée et une sortie de fluide réfrigérant à basse pression en provenance du deuxième point de raccordement 32, ainsi qu'une entrée et une sortie de fluide réfrigérant à haute pression en provenance de l'échangeur de chaleur bifluide 5.

On entend par fluide réfrigérant à haute pression que le fluide réfrigérant est à une pression proche de celle qu'il a en sortie du compresseur 3 et qu'il n'a pas encore subi de perte de pression au niveau d'un dispositif de détente. Par fluide réfrigérant à basse pression on entend un fluide réfrigérant ayant subit une perte de pression au niveau d'un dispositif de détente et dont la pression est proche de celle qu'il a en entrée du compresseur 3.

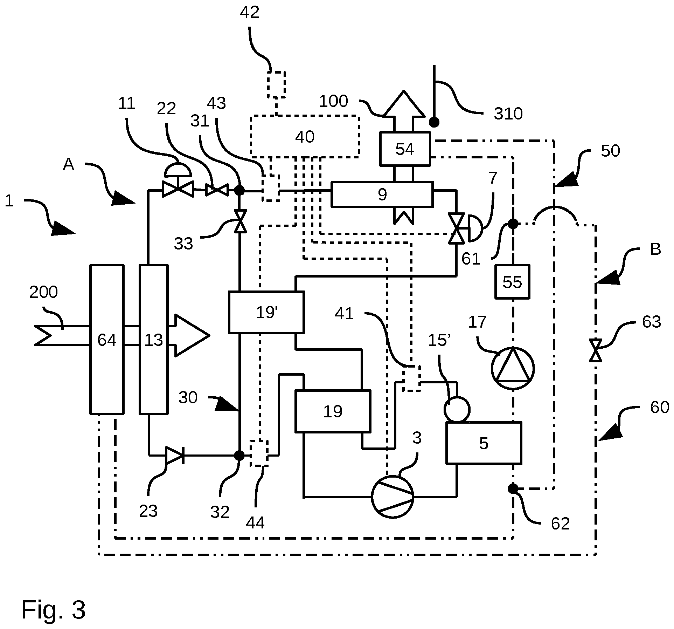

Comme illustré à la figure 3, la première boucle de fluide réfrigérant A peut comporter, en supplément du premier échangeur de chaleur interne 19, un deuxième échangeur de chaleur interne 19' permettant un échange de chaleur entre le fluide réfrigérant à haute pression en sortie du premier échangeur de chaleur interne 19 et le fluide réfrigérant à basse pression circulant dans la conduite de contournement 30, c'est à dire en provenance du premier point de raccordement 31. Ce deuxième échangeur de chaleur interne 19' comporte notamment une entrée et une sortie de fluide réfrigérant à basse pression en provenance du premier point de raccordement 31, ainsi qu'une entrée et une sortie de fluide réfrigérant à haute pression en provenance du premier échangeur de chaleur interne 19.

Au moins un des premier 19 ou deuxième 19' échangeurs de chaleur internes peut être un échangeur de chaleur coaxial, c'est à dire comportant deux tubes coaxiaux et entre lesquels s'effectuent les échanges de chaleur.

De préférence, le premier échangeur de chaleur interne 19 peut être un échangeur de chaleur interne coaxial d'une longueur comprise entre 50 et 120mm alors que le deuxième échangeur de chaleur interne 19' peut être un échangeur de chaleur interne coaxial d'une longueur comprise entre 200 et 700mm.

Comme le montrent les figures 1 et 2, la première boucle de fluide réfrigérant peut également comporter un accumulateur 15 disposé en amont du compresseur 3, plus précisément entre le deuxième point de raccordement 32 et ledit compresseur 3. Dans le cas où un premier échangeur de chaleur interne 19 est présent, ledit accumulateur 15 est disposé en amont dudit premier échangeur de chaleur interne 19, entre le deuxième point de raccordement 32 et ledit premier échangeur de chaleur interne 19. Cet accumulateur 15 permet notamment de réaliser une séparation de phase du fluide réfrigérant de sorte que le fluide réfrigérant arrivant au compresseur 3 ou dans le premier échangeur de chaleur interne 19 soit en phase gazeuse.

Selon une variante illustrée à la figure 3, la première boucle de fluide réfrigérant A peut comporter à la place d'un accumulateur 15, une bouteille déshydratante 15' disposée en aval de l'échangeur de chaleur bifluide 5, plus précisément entre ledit échangeur de chaleur bifluide 5 et le premier échangeur de chaleur interne 19. Une telle bouteille déshydratante 15' disposée sur le côté haute pression du circuit de climatisation, c'est à dire en aval du compresseur 3 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est à dire en amont du compresseur 3, notamment en amont du premier échangeur de chaleur interne 19.

Le circuit de climatisation inversible 1 indirect comporte également un dispositif de redirection du fluide réfrigérant en provenance du premier échangeur de chaleur 9 vers le deuxième échangeur de chaleur 13 ou vers la conduite de contournement 30.

Ce dispositif de redirection du fluide réfrigérant en provenance du premier échangeur de chaleur 9 peut notamment comporter :
- une première vanne d'arrêt 22 disposée en aval du premier point de raccordement 31, entre ledit premier point de raccordement 31 et le deuxième dispositif de détente 11. Une alternative à cette première vanne d'arrêt 22 peut être que le deuxième dispositif de détente 11 comporte une fonction d'arrêt de sorte à pouvoir bloquer le fluide réfrigérant et l'empêcher de circuler,
- une deuxième vanne d'arrêt 33 disposée sur la conduite de contournement 30, et
- un clapet antiretour 23 disposé en aval du deuxième échangeur de chaleur 13, entre ledit deuxième échangeur de chaleur 13 et le deuxième point de raccordement 32.

Une autre alternative (non représentée) peut également être de disposer une vanne trois-voies au niveau du premier point de raccordement 31.

Le dispositif de redirection du fluide réfrigérant peut notamment être relié et piloté par l'unité centrale de contrôle 40 embarquée dans le véhicule automobile. Ainsi, la première vanne d'arrêt 22 ou le deuxième dispositif de détente 11 avec fonction d'arrêt, et la deuxième vanne d'arrêt 33 peuvent être reliés à l'unité de contrôle 40 afin de piloter le trajet du fluide réfrigérant (ces liaisons ne sont pas illustrées sur les différentes figures 1 à 3).

Le premier dispositif de détente 7 peut notamment être une vanne électronique d'expansion, reliée à l'unité centrale de contrôle 40 et dont le diamètre d'ouverture est piloté par ladite unité centrale de contrôle 40 afin de régler la perte de pression subie par le fluide réfrigérant. Le deuxième dispositif de détente 11 peut quant à lui être une vanne d'expansion thermostatique dont le bulbe thermostatique est relié au fluide réfrigérant en sortie du deuxième échangeur de chaleur 13. Le deuxième dispositif de détente 11 peut également être un orifice tube.

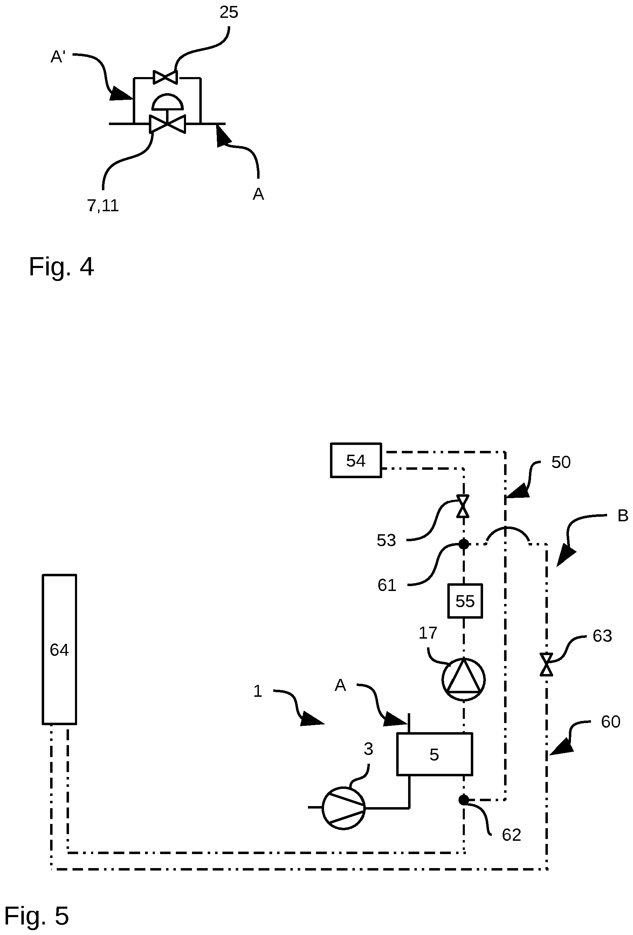

Comme le montre plus en détail la figure 4, les premier 7 et deuxième 11 dispositifs de détente peuvent être contournés par une conduite de dérivation A', comportant notamment une vanne d'arrêt 25 de contournement. Cette conduite de dérivation A' permet au fluide réfrigérant de contourner le premier 7 ou le deuxième 11 dispositifs de détente sans qu'il subisse une perte de pression. Une alternative pour que le fluide réfrigérant traverse le premier 7 ou le deuxième 11 dispositifs de détente sans perte de pression est que cette dernière comporte une fonction d'ouverture maximum dans laquelle le fluide réfrigérant peut les traverser sans perte de pression.

L'unité centrale de contrôle 40 peut en outre être connectée au compresseur 3 afin de le piloter et de définir son régime et ainsi définir la pression du fluide réfrigérant en sortie dudit compresseur 3.

Le circuit de climatisation inversible 1 indirect peut comporter un capteur de pression 41 du fluide réfrigérant à haute pression. Ce capteur 41 est disposé en aval de l'échangeur de chaleur bifluide 5, entre ledit échangeur de chaleur bifluide 5 et le premier dispositif de détente 7. Lorsque le circuit inversible 1 indirect comporte un premier échangeur de chaleur interne 19, le capteur de pression 41 du fluide réfrigérant à haute pression est disposé entre l'échangeur de chaleur bifluide 5 et le premier échangeur de chaleur interne 19 afin que les mesures de pression et de températures ne soient pas affectées par ledit premier échangeur de chaleur interne 19. Ce capteur de pression 41 du fluide réfrigérant à haute pression est connecté à l'unité centrale de contrôle 40 et permet à cette dernière de connaître la pression du fluide réfrigérant en sortie de l'échangeur de chaleur bifluide 5.

Le circuit de climatisation inversible 1 indirect peut comporter un capteur de température 42 de la température extérieure ainsi qu'un capteur de pression 43 du fluide réfrigérant à pression intermédiaire. Ce capteur de pression 43 est disposé en aval du premier dispositif de détente 7, entre ledit premier dispositif de détente 7 et le deuxième dispositif de détente 11. Plus particulièrement, le capteur de pression 43 du fluide réfrigérant à pression intermédiaire est disposé en aval du premier échangeur de chaleur 9, entre ledit premier échangeur de chaleur 9 et le premier point de raccordement 31, comme illustré sur les figures 1, 2 et 3. Il est néanmoins tout à fait possible de disposer ce capteur de pression 43 en amont du premier échangeur de chaleur 9, entre le premier dispositif de détente 7 et ledit premier échangeur de chaleur 9.

Le capteur de température 42 de la température extérieure ainsi que le capteur de pression 43 du fluide réfrigérant à pression intermédiaire sont tout deux connectés à l'unité centrale de contrôle 40 et permettent à cette dernière de connaître la température de l'air extérieure au véhicule automobile ainsi que la pression du fluide réfrigérant en sortie du premier dispositif de détente 7 et plus particulièrement en sortie du premier échangeur de chaleur 9.

Le circuit de climatisation inversible 1 indirect peut également comporter un capteur de pression 44 du fluide réfrigérant à basse pression. Ce capteur de pression 44 est disposé en aval la conduite de contournement 30, plus précisément entre le deuxième point de raccordement 32 et le compresseur 3. Lorsque le circuit inversible 1 indirect comporte un premier échangeur de chaleur interne 19, le capteur de pression 41 du fluide réfrigérant à basse pression est disposé entre le deuxième point de raccordement 32 et le premier échangeur de chaleur interne 19 afin que la mesure de pression ne soient pas affectée par ledit premier échangeur de chaleur interne 19.

L'unité centrale de contrôle 40 peut également être reliée a d'autre capteurs (non représentés à afin de mesurer notamment la température du flux d'air intérieur 100 en sortie du premier échangeur de chaleur 9, la température du fluide caloporteur en sortie de l'échangeur de chaleur bifluide 5.

La deuxième boucle de fluide caloporteur B, représentée en trait pointillés comprenant trois tirets et deux points sur les différentes figures, peut comporter quant à elle :
∘ l'échangeur de chaleur bifluide 5,
∘ un troisième échangeur de chaleur 54 destiné à être traversé par le flux d'air intérieur 100, et
∘ un quatrième échangeur de chaleur 64 destiné à être traversé par un flux d'air extérieur 200.

La deuxième boucle de fluide caloporteur B comporte également une pompe 17 pour mettre en mouvement le fluide caloporteur.

Plus particulièrement, le troisième 54 et le quatrième 64 échangeur de chaleur peuvent être disposés en parallèle. Ainsi, comme illustré sur les figures 1 à 3, la deuxième boucle de fluide caloporteur peut comporter :
∘ une première conduite de circulation 50 de fluide caloporteur comportant le troisième échangeur de chaleur 54 et reliant un premier point de jonction 61 disposé en aval de l'échangeur de chaleur bifluide 5 et un deuxième point de jonction 62 disposé en amont dudit échangeur de chaleur bifluide 5,
∘ une deuxième conduite de circulation 60 de fluide caloporteur comportant le quatrième échangeur de chaleur 64 et reliant le premier point de jonction 61 disposé en aval de l'échangeur de chaleur bifluide 5 et le deuxième point de jonction 62 disposé en amont dudit échangeur de chaleur bifluide 5, et
∘ la pompe 17 peut alors être disposée en aval ou en amont de l'échangeur de chaleur bifluide 5, entre le premier point de jonction 61 et le deuxième point de jonction 62.

Le circuit de climatisation inversible 1 indirect comporte au sein de la deuxième boucle de fluide caloporteur B un dispositif de redirection du fluide caloporteur en provenance de l'échangeur de chaleur bifluide 5 vers la première conduite de circulation 50 et/ou vers la deuxième conduite de circulation 60.

Comme illustré sur les figures 1 à 3, ledit dispositif de redirection du fluide caloporteur en provenance de l'échangeur de chaleur bifluide 5 peut notamment comporter une quatrième vanne d'arrêt 63 disposée sur la deuxième conduite de circulation 60 afin de bloquer ou non le fluide caloporteur et de l'empêcher de circuler dans ladite deuxième conduite de circulation 60.

Le circuit de climatisation inversible 1 indirect peut également comporter un volet d'obstruction 310 du flux d'air intérieur 100 traversant le troisième échangeur de chaleur 54.

Ce mode de réalisation permet notamment de limiter le nombre de vannes sur la deuxième boucle de fluide caloporteur B et ainsi permet de limiter les coûts de productions.

Selon un mode de réalisation alternatif illustré à la figure 5, le dispositif de redirection du fluide caloporteur en provenance de l'échangeur de chaleur bifluide 5 peut notamment comporter
- une troisième vanne d'arrêt 63 disposée sur la deuxième conduite de circulation 60 afin de bloquer ou non le fluide caloporteur et de l'empêcher de circuler dans ladite deuxième conduite de circulation 60, et
- une quatrième vanne d'arrêt 53 disposée sur la première conduite de circulation 50 afin de bloquer ou non le fluide caloporteur et de l'empêcher de circuler dans ladite première conduite de circulation 50.

A l'instar du dispositif de redirection du fluide réfrigérant, le dispositif de redirection du fluide caloporteur peut être relié et piloté par l'unité centrale de contrôle 40 embarquée dans le véhicule automobile. Ainsi, la troisième vanne d'arrêt 63, la quatrième vanne d'arrêt 53 ou le volet d'obstruction 310 peuvent être reliés à l'unité de contrôle 40 afin de piloter le trajet du fluide caloporteur (ces liaisons ne sont pas illustrées sur les différentes figures 1 à 3).

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval de l'échangeur de chaleur bifluide 5, entre ledit échangeur de chaleur bifluide 5 et le premier point de jonction 61.

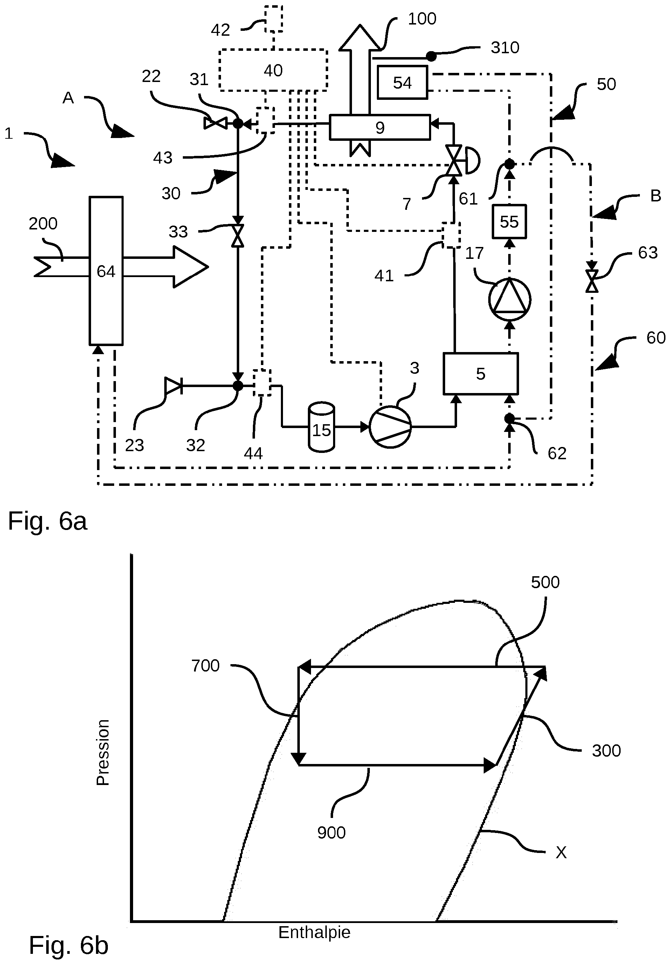

Aux figures 6a à 9b sont illustrés différents modes de fonctionnement du circuit de climatisation inversible 1 indirect. Sur les figures 6a, 7a, 8a et 9a, seuls les éléments dans lesquels le fluide réfrigérant et/ou le fluide caloporteur circulent sont représentés. Le sens de circulation du fluide réfrigérant et/ou du fluide caloporteur est représenté par des flèches.

### 1) mode de refroidissement :

La figure 6a montre plus un procédé de fonctionnement selon un mode de refroidissement dans lequel :
- le fluide réfrigérant passe successivement dans le compresseur 3 où il passe à haute pression, l'échangeur de chaleur bifluide 5, le premier dispositif de détente 7 où il passe à basse pression, le premier échangeur de chaleur 9 et dans la branche de contournement 30 avant de rejoindre le compresseur 3,
- les échanges d'énergie calorifique entre le fluide caloporteur et le flux d'air intérieur 100 sont bloqués et l'énergie calorifique évacuée au niveau du quatrième échangeur de chaleur 64 dans le flux d'air extérieur 200.

Afin que les échanges d'énergie calorifique entre le fluide caloporteur et le flux d'air intérieur 100 soient bloqués et l'énergie calorifique évacuée au niveau du quatrième échangeur de chaleur 64 dans le flux d'air extérieur 200, une portion du fluide caloporteur en sortie de l'échangeur de chaleur bifluide 5 circule dans le troisième échangeur de chaleur 54 de la première conduite de circulation 50 et une autre portion du fluide caloporteur en sortie de l'échangeur de chaleur bifluide 5 circule dans le quatrième échangeur de chaleur 64 de la deuxième conduite de circulation 50. Le volet d'obstruction 310 est également fermé de sorte à empêcher le flux d'air intérieur 100 de circuler dans le troisième échangeur de chaleur 54.

Une solution alternative (non représentée) est de munir comme sur la figure 5 la première conduite de circulation 50 de la quatrième vanne d'arrêt 53 et de la fermer de sorte à empêcher le fluide caloporteur de circuler dans ladite première conduite de circulation 50 et donc dans le troisième échangeur de chaleur.

Dans ce mode de refroidissement, le dispositif de redirection du fluide réfrigérant est piloté par l'unité centrale de contrôle 40 de sorte que le fluide réfrigérant ne circule pas dans le deuxième échangeur de chaleur 13.

Cela est notamment possible en fermant la première vanne d'arrêt 22, ou en fermant le deuxième dispositif de détente 11 s'il est équipé d'une fonction d'arrêt, et en ouvrant la deuxième vanne d'arrêt 33 afin que le fluide réfrigérant à basse pression en sortie du premier échangeur de chaleur 9 ne circule pas dans le deuxième échangeur de chaleur 13 et passe dans la conduite de contournement 30.

Le clapet antiretour 23 permet d'éviter que du fluide réfrigérant à basse pression en sortie de la conduite de contournement 30 ne reflue vers le deuxième échangeur de chaleur 13.

Les variations de pression et d'enthalpie que subit le fluide réfrigérant lors de ce mode de refroidissement, sont illustrées sur le diagramme pression/enthalpie de la figure 6b. La courbe X représente la courbe de saturation du fluide réfrigérant.

Le fluide réfrigérant à l'entrée du compresseur 3 est en phase gazeuse. Le fluide réfrigérant subit une compression, illustrée par la flèche 300, en passant dans le compresseur 3 de sorte à passer à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une perte de pression isenthalpique, illustrée par la flèche 700 et passe à basse pression. Le fluide réfrigérant croise la courbe de saturation X, ce qui le fait passer dans un état biphasique.

Le fluide réfrigérant à basse pression passe ensuite dans le premier échangeur de chaleur 9 où il gagne de l'enthalpie, comme illustré par la flèche 900, en refroidissant le flux d'air intérieur 100. Le fluide réfrigérant à basse pression rejoint ainsi la courbe de saturation X et repasse à l'état gazeux.

A la sortie du premier échangeur de chaleur 9, le fluide réfrigérant à basse pression est redirigé vers la conduite de contournement 30 avant de rentrer de nouveau dans le compresseur 3.

Ce mode de refroidissement est utile pour refroidir le flux d'air intérieur 100.

### 2) premier mode de déshumidification :

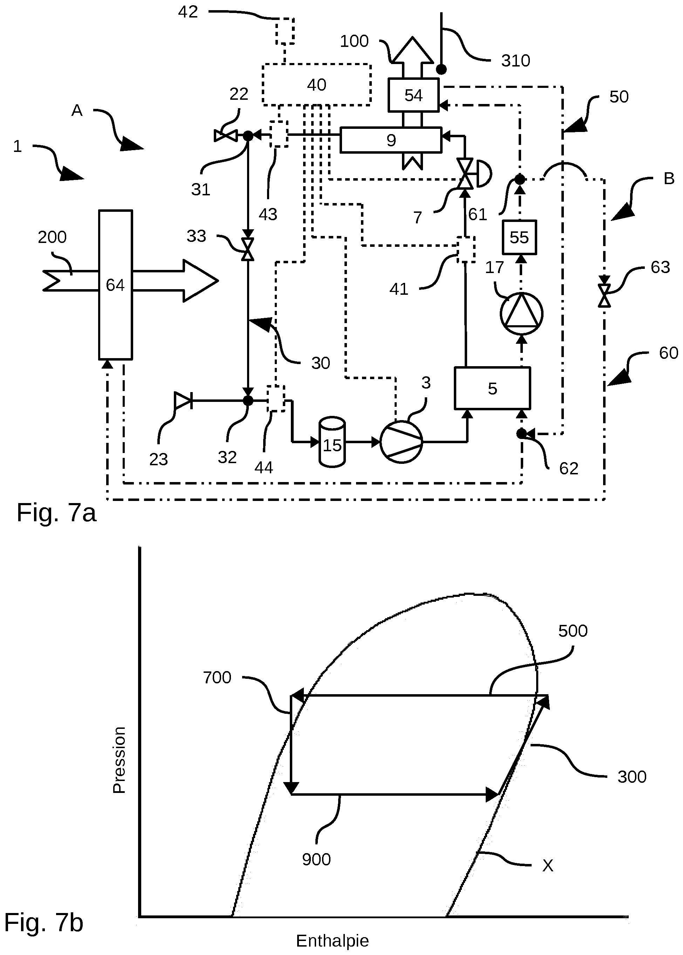

La figure 7a montre plus particulièrement un procédé de fonctionnement selon un premier mode de déshumidification.

Ce premier mode de déshumidification diffère du mode de refroidissement par le fait que le fluide caloporteur peut évacuer de l'énergie calorifique également au niveau du troisième échangeur de chaleur 54 dans le flux d'air intérieur 100.

Ainsi, au niveau de la première boucle de fluide réfrigérant A, le trajet du fluide réfrigérant est identique à celui du mode de refroidissement. De ce fait, les variations de pression et d'enthalpie que subit le fluide réfrigérant lors de ce premier mode de déshumidification et illustrées sur le diagramme pression/enthalpie de la figure 7b, sont identiques à celles du mode de refroidissement.

Au niveau de la deuxième boucle de fluide réfrigérant B, le volet d'obturation 310 est ouvert et si elle est présente, la quatrième vanne d'arrêt est ouverte de sorte que le fluide réfrigérant puisse échanger de l'énergie calorifique avec le flux d'air intérieur 100 qui traverse le troisième échangeur de chaleur 54.

Du fait du refroidissement du flux d'air intérieur 100 au niveau du premier échangeur de chaleur 9 qui permet la condensation de son humidité, puis de son réchauffage au niveau du troisième échangeur de chaleur 54, ledit flux d'air intérieur 100 est déshumidifié.

### 3) mode pompe à chaleur :

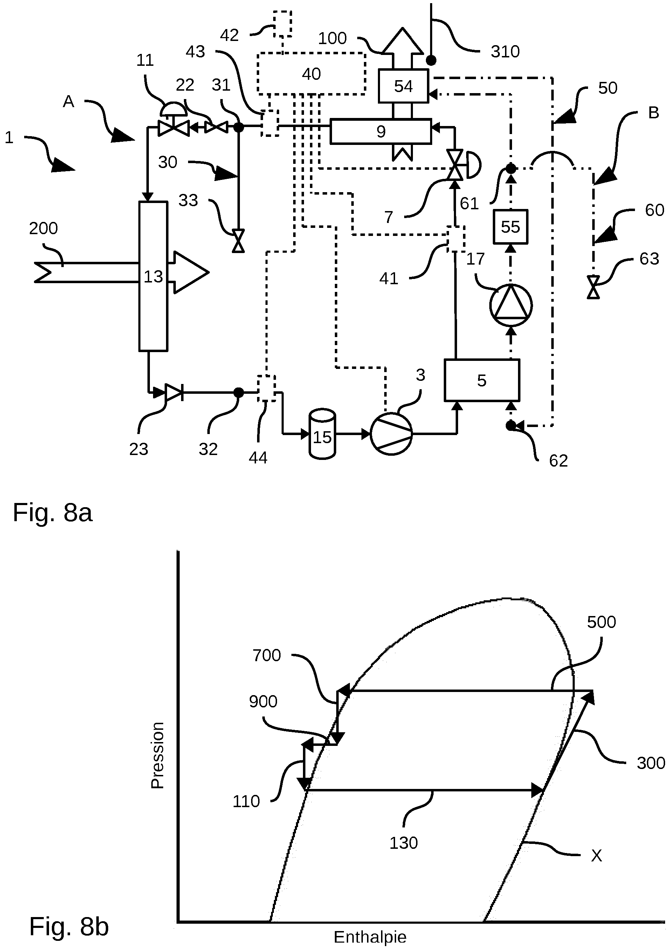

La figure 8a montre un procédé de fonctionnement selon un mode pompe à chaleur dans lequel :
- le fluide réfrigérant passe successivement dans le compresseur 3 où il passe à haute pression, l'échangeur de chaleur bifluide 5, le premier dispositif de détente 7 où il passe à une pression intermédiaire, le premier échangeur de chaleur 9, le deuxième dispositif de détente 11 où il passe à basse pression, et dans le deuxième échangeur de chaleur 13 avant de rejoindre le compresseur 3,
- les échanges d'énergie calorifique entre le fluide caloporteur et le flux d'air extérieur 200 sont bloqués et l'énergie calorifique évacuée au niveau du troisième échangeur de chaleur 54 dans le flux d'air intérieur 100.

Afin que les échanges d'énergie calorifique entre le fluide caloporteur et le flux d'air extérieur 200 soient bloqués et l'énergie calorifique évacuée au niveau du troisième échangeur de chaleur 54 dans le flux d'air intérieur 100, la totalité du fluide caloporteur en sortie de l'échangeur de chaleur bifluide 5 circule dans le troisième échangeur de chaleur 54 de la première conduite de circulation 50 et la deuxième conduite de circulation 50 est bloquée de sorte que le fluide caloporteur ne circule pas dans le quatrième échangeur de chaleur 64. Pour cela, la troisième vanne d'arrêt 63 est fermée. Le volet d'obstruction 310 est également ouvert de sorte à permettre au flux d'air intérieur 100 de circuler dans le troisième échangeur de chaleur 54.

Dans le cas, comme sur la figure 5, où la deuxième boucle de fluide caloporteur B et plus précisément la première conduite de circulation 50, comporte une quatrième vanne d'arrêt 53, celle-ci est ouverte de sorte à permettre au fluide caloporteur de circuler dans ladite première conduite de circulation 50 et donc dans le troisième échangeur de chaleur.

Dans ce mode de pompe à chaleur, le dispositif de redirection du fluide réfrigérant est piloté par l'unité centrale de contrôle 40 de sorte que le fluide réfrigérant ne circule pas le deuxième échangeur de chaleur 13.

Cela est notamment possible en ouvrant la première vanne d'arrêt 22, ou en ouvrant le deuxième dispositif de détente 11 s'il est équipé d'une fonction d'arrêt, et en fermant la deuxième vanne d'arrêt 33 afin que le fluide réfrigérant à pression intermédiaire en sortie du premier échangeur de chaleur 9 passe dans le deuxième échangeur de chaleur 13 et ne circule pas dans la conduite de contournement 30.

Les variations de pression et d'enthalpie que subit le fluide réfrigérant lors de ce mode pompe à chaleur, sont illustrées sur le diagramme pression / enthalpie de la figure 8b. La courbe X représente la courbe de saturation du fluide réfrigérant.

Le fluide réfrigérant à l'entrée du compresseur 3 est en phase gazeuse et à basse pression. Le fluide réfrigérant subit une compression, illustrée par la flèche 300, en passant dans le compresseur 3 et passe à haute pression.

Le fluide réfrigérant à haute pression traverse ensuite l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier dispositif de détente 7. Le fluide réfrigérant subit une première perte de pression isenthalpique, illustrée par la flèche 700 et croise la courbe de saturation X, ce qui le fait passer dans un état de mélange liquide plus gaz. On parle ici de fluide à pression intermédiaire.

Le fluide réfrigérant à pression intermédiaire traverse ensuite le premier échangeur de chaleur 9 où il continue de perdre de l'enthalpie comme illustré par la flèche 900 en réchauffant le flux d'air intérieur 100.

A la sortie du premier échangeur de chaleur 9, le fluide réfrigérant à pression intermédiaire est redirigé vers le deuxième échangeur de chaleur 13. Avant d'arriver au deuxième échangeur de chaleur 13, le fluide réfrigérant à pression intermédiaire passe dans le deuxième dispositif de détente 11 où il subit une deuxième perte de pression isenthalpique illustrée par la flèche 110 et passe ainsi à basse pression.

Le fluide réfrigérant à basse pression traverse ensuite le deuxième échangeur de chaleur 13 où il gagne de l'enthalpie, comme illustré par la flèche 130, en absorbant de l'enthalpie du flux d'air extérieur 200. Le fluide réfrigérant à basse pression rejoint ainsi la courbe de saturation X et repasse à l'état gazeux.

Le fluide réfrigérant à basse pression rejoint ensuite le compresseur 3.

Ce mode pompe à chaleur est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13.

De plus, l'élément électrique chauffant 55 peut être en fonctionnement afin de fournir un apport supplémentaire d'énergie calorifique au fluide caloporteur pour réchauffer le flux d'air intérieur 100.

### 4) deuxième mode de déshumidification :

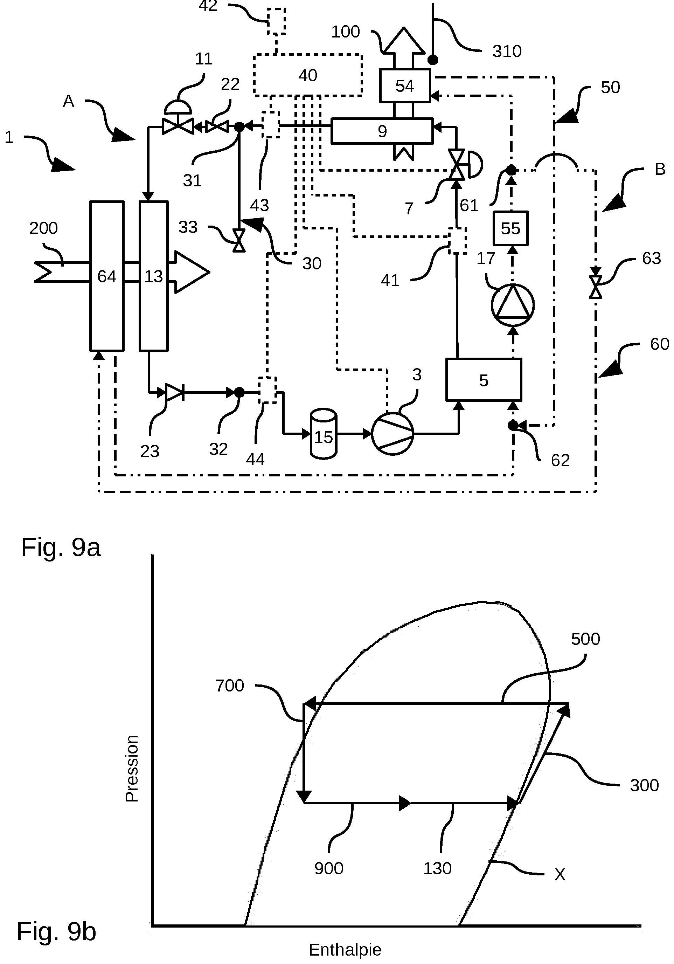

La figure 9a montre un procédé de fonctionnement selon un deuxième mode de déshumidification.

Ce deuxième mode de déshumidification diffère du mode pompe à chaleur par le fait que :
- le fluide réfrigérant traverse le premier dispositif de détente 7 où il passe à basse pression et traverse le deuxième dispositif de détente 11 sans perte de pression,
- le fluide caloporteur peut évacuer de l'énergie calorifique à la fois au niveau du troisième échangeur de chaleur 54 et au niveau du quatrième échangeur de chaleur 64 dans le flux d'air extérieur 200.

Ainsi, au niveau de la première boucle de fluide réfrigérant A, le trajet du fluide réfrigérant est identique à celui du mode de refroidissement à la différence que le fluide réfrigérant ne subit qu'une seule perte de pression au niveau du premier dispositif de détente 7. Le fluide réfrigérant passe au travers du deuxième dispositif de détente 11 ou le contourne, sans perte de pression.

De ce fait, les variations de pression et d'enthalpie que subit le fluide réfrigérant lors de ce deuxième mode de déshumidification et illustrées sur le diagramme pression/enthalpie de la figure 9b, diffèrent de celles du mode pompe à chaleur.

Le fluide réfrigérant à l'entrée du compresseur 3 est en phase gazeuse. Le fluide réfrigérant subit une compression, illustrée par la flèche 300, en passant dans le compresseur 3 de sorte à passer à haute pression.

Le fluide réfrigérant à haute pression traverse l'échangeur de chaleur bifluide 5 et subit une perte d'enthalpie, illustrée par la flèche 500, du fait du passage en phase liquide du fluide réfrigérant et du transfert d'enthalpie vers le fluide caloporteur de la deuxième boucle de fluide caloporteur B. Le fluide réfrigérant perd alors de l'enthalpie tout en restant à une pression constante.

Le fluide réfrigérant passe ensuite dans le premier dispositif de détente 7. Le fluide réfrigérant subit une perte de pression isenthalpique, illustrée par la flèche 700 et passe à basse pression. Le fluide réfrigérant croise la courbe de saturation X, ce qui le fait passer dans un état biphasique.

Le fluide réfrigérant à basse pression passe ensuite dans le premier échangeur de chaleur 9 où il gagne de l'enthalpie, comme illustré par la flèche 900, en refroidissant le flux d'air intérieur 100.

A la sortie du premier échangeur de chaleur 9, le fluide réfrigérant à basse pression passe par le deuxième dispositif de détente 11 sans perte de pression et traverse ensuite le deuxième échangeur de chaleur 130 où il gagne de l'enthalpie, comme illustré par la flèche 130, en refroidissant le flux d'air extérieur 200. Le fluide réfrigérant à basse pression rejoint ainsi la courbe de saturation X et repasse à l'état gazeux avant de rentrer de nouveau dans le compresseur 3.

Au niveau de la deuxième boucle de fluide réfrigérant B, le volet d'obturation 310 est ouvert et si elle est présente, la quatrième vanne d'arrêt est ouverte de sorte que le fluide réfrigérant puisse échanger de l'énergie calorifique avec le flux d'air intérieur 100 qui traverse le troisième échangeur de chaleur 54, la troisième vanne d'arrêt 63 étant fermée. Du fait du refroidissement du flux d'air intérieur 100 au niveau du premier échangeur de chaleur 9 qui permet la condensation de son humidité, puis de son réchauffage au niveau du troisième échangeur de chaleur 54, ledit flux d'air intérieur 100 est déshumidifié.

Dans le cas où la transition se fait dans le premier sens de la trame de transition de mode, l'unité centrale de contrôle 40 pilote le régime du compresseur 3, l'ouverture du premier dispositif de détente 7, ainsi que les dispositifs de redirection du fluide réfrigérant et du fluide caloporteur, notamment en ouvrant ou fermant les différentes vannes d'arrêt et/ou sur le deuxième dispositif de détente 11.

Dans le cas où la transition se fait dans le deuxième sens de la trame de transition, l'unité centrale de contrôle 40 mesure et calcule la différence de pression du fluide réfrigérant entre la pression mesurée au niveau du capteur de pression 43 du fluide réfrigérant à pression intermédiaire et du capteur de pression 44 du fluide réfrigérant à basse pression.

Si cette différence de pression est inférieure au seuil prédéterminé, l'unité centrale de contrôle 40 peut piloter le passage d'un mode de fonctionnement à l'autre.

Si cette différence de pression est supérieure au seuil prédéterminé, l'unité centrale de contrôle 40 pilote le compresseur 3 de sorte à diminuer ladite différence de pression.

Dans le premier sens de la trame de transition, lors du passage du mode de refroidissement au premier mode de déshumidification, il n'y a pas de changement sur la première boucle de fluide réfrigérant A. Le seul changement est au niveau de la deuxième boucle de fluide caloporteur B où la quatrième vanne d'arrêt 53 est ouverte et le volet d'obturation 310 est ouvert pour permettre le passage du flux d'air dans le troisième échangeur de chaleur 54.

Lors du passage du premier mode déshumidification au deuxième mode de déshumidification,
- dans un premier temps, la première vanne d'arrêt 22 est ouverte et la vanne d'arrêt 25 de contournement est ouverte ou alors le deuxième dispositif de détente 11 est ouvert complètement de sorte que le fluide réfrigérant puisse le traverser sans perte de pression, et
- dans un deuxième temps la deuxième vanne d'arrêt 33 est fermée.

Lors du passage du deuxième mode déshumidification au mode pompe à chaleur, la vanne d'arrêt 25 est fermée (lorsque le deuxième dispositif de détente 11 peut être contourné). Le deuxième dispositif de détente 11 se ferme pour faire subir au fluide réfrigérant une deuxième perte de pression.

Lors de ce passage du deuxième mode de déshumidification au mode pompe à chaleur, le flux d'air intérieur 100 est de préférence redirigé vers la partie inférieure ou médiane de l'habitacle. Cette redirection est notamment possible au moyen d'un dispositif de chauffage, ventilation et climatisation qui permet la redistribution du flux d'air intérieur 100 dans l'habitacle. Ce dispositif de chauffage, ventilation et climatisation permet généralement une redistribution au niveau :
- de la partie supérieur de l'habitacle, plus précisément contre le pare-brise,
- de la partie médiane de l'habitacle, plus précisément dirigé vers les occupants du véhicule automobile, et
- de la partie inférieure de l'habitacle, plus précisément vers le pédalier et les pieds des occupants du véhicule automobile.

Lors du deuxième mode de déshumidification le premier échangeur de chaleur 9 est froid et de l'humidité est condensée sur ce dernier. Lors du passage en mode pompe à chaleur, le premier échangeur de chaleur 9 est chaud et l'humidité condensée lors du deuxième mode de déshumidification se vaporise et part en direction de l'habitacle. Si le flux d'air intérieur était dirigé vers la partie supérieure de l'habitacle, le pare-brise du fait de cet humidité pour s'embuer et ainsi diminuer la visibilité du conducteur, ce qui serait dangereux.

Lors du passage du deuxième mode déshumidification au premier mode de déshumidification,
- dans un premier temps la deuxième vanne d'arrêt 33 est ouverte, et
- dans un deuxième temps, la première vanne d'arrêt 22 est fermée ou la vanne d'arrêt 25 de contournement et le deuxième dispositif de détente 11 sont fermés.

Dans le deuxième sens de la trame de transition, lors du passage du mode pompe à chaleur au deuxième mode de déshumidification, la vanne d'arrêt 25 de contournement est ouverte ou le deuxième dispositif de détente 11 est ouvert complètement de sorte que le fluide réfrigérant puisse le traverser sans perte de pression.

Lors du passage du deuxième mode déshumidification au premier mode de déshumidification,
- dans un premier temps la deuxième vanne d'arrêt 33 est ouverte, et
- dans un deuxième temps, la première vanne d'arrêt 22 est fermée ou la vanne d'arrêt 25 de contournement et le deuxième dispositif de détente 11 sont fermés.

Lors du passage du premier mode de déshumidification au mode de refroidissement, il n'y a pas de changement sur la première boucle de fluide réfrigérant A. Le seul changement est au niveau de la deuxième boucle de fluide caloporteur où la quatrième vanne d'arrêt 53 est fermée et le volet d'obturation 310 est fermé étant donné qu'il s'agisse d'un mode de refroidissement.

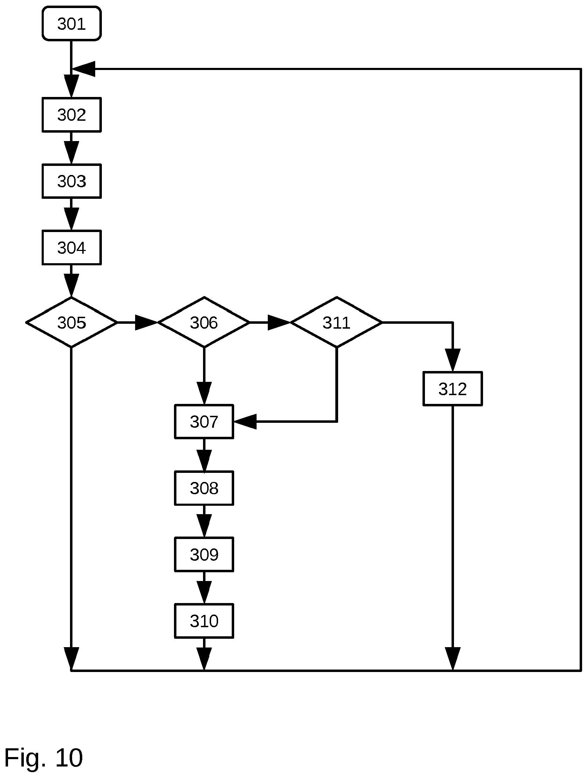

La figure 10 montre plus précisément un logigramme d'un exemple de procédé de gestion selon l'invention pour notamment le circuit de climatisation inversible 1 illustré à la figure 1.

L'étape 301 correspond à l'étape de début du procédé de gestion, par exemple par réception d'une commande de changement de mode de fonctionnement par un utilisateur.

L'étape 302 est une étape de mesure des paramètres du circuit de climatisation inversible 1 indirect, notamment de la pression intermédiaire, la basse pression. D'autres paramètres comme la haute pression, le régime du compresseur, la température extérieure, la température du flux d'air intérieur 100 en sortie du premier échangeur de chaleur 9, la température du fluide caloporteur en sortie de l'échangeur de chaleur bifluide ou encore l'ouverture du premier dispositif de détente 7 peuvent également être mesurées.

L'étape 303 est un étape de définition du mode de fonction actuel en fonctions des mesures effectuées dans l'étape 302.

L'étape 304 est une étape d'identification d'un mode de fonctionnement souhaité par un utilisateur.

Lors de l'étape 305 de vérification, si le mode de fonctionnement souhaité est le même que le mode actuel, le procédé de gestion retourne à l'étape 302.

Si le mode de fonctionnement diffère du mode actuel, le procédé de gestion passe à l'étape 306.

Lors de l'étape 306 qui est également une étape de vérification, si le mode de fonctionnement actuel souhaité permet un passage vers le mode de fonctionnement souhaité selon le premier sens de la trame de transition de mode, le procédé de gestion passe à l'étape 307.

Si le mode actuel souhaité permet un passage vers le mode de fonctionnement souhaité selon le deuxième sens de la trame de transition de mode, le procédé de gestion passe à l'étape 311.

A l'étape 307, l'unité centrale de contrôle 40 adapte le régime du compresseur 3 afin qu'il corresponde à celui du mode de fonctionnement suivant dans la trame de transition de mode.

A l'étape 308, ladite unité de contrôle 40 commande les ouvertures des vannes nécessaires pour le passage au mode de fonctionnement suivant dans la trame de transition de mode.

A l'étape 309, ladite unité de contrôle 40 commande les fermetures des vannes nécessaires pour le passage au mode de fonctionnement suivant dans la trame de transition de mode.

Lors de l'étape 310, l'unité centrale de contrôle vérifie si le mode de fonctionnement atteint est le mode de fonctionnement souhaité. Si ce n'est pas le cas, le procédé de gestion recommence à l'étape 302. si c'est le cas, le procédé de gestion peut s'arrêter.

A l'étape 311, l'unité centrale de contrôle 40 compare le seuil de pression prédéterminé avec la différence de pression du fluide réfrigérant entre la pression mesurée au niveau du capteur de pression 43 du fluide réfrigérant à pression intermédiaire et du capteur de pression 44 du fluide réfrigérant à basse pression.

Si cette différence de pression est inférieure au seuil de pression prédéterminé, le procédé de gestion passe à l'étape 307.

Si cette différence de pression est supérieure au seuil de pression prédéterminé, le procédé de gestion passe à l'étape 312.

Dans cette étape 312, l'unité centrale de contrôle 40 commande le compresseur 3 de sorte à diminuer son régime et ainsi faire diminuer la pression du fluide réfrigérant.

Le procédé de gestion recommence ensuite à l'étape 302.

Ainsi, on voit bien que le procédé de gestion selon l'invention permet le passage d'un mode de fonctionnement à un autre sans avoir à stopper le compresseur 3 et attendre un équilibrage des pressions du fluide réfrigérant. Cela permet ainsi de ne pas mettre en suspend la gestion thermique de l'habitacle pendant cet arrêt et permet un meilleur confort thermique des occupants du véhicule automobile.

## Revendications

1. Procédé de gestion d'un circuit de climatisation inversible (1), ledit circuit étant apte à fonctionner selon :
∘ un mode de refroidissement où un flux d'air intérieur (100) à destination de l'habitacle est refroidi, l'énergie calorifique récupérée du flux d'air intérieur (100) étant rejetée dans un flux d'air extérieur (200) au véhicule automobile,
∘ un premier mode de déshumidification, dérivé du mode de refroidissement et où le flux d'air intérieur (100) est refroidi puis réchauffé avant d'arriver dans l'habitacle,
∘ un mode pompe à chaleur où le flux d'air intérieur (100) est réchauffé, l'énergie calorifique réchauffant le flux d'air intérieur (100) étant récupérée du flux d'air extérieur (200), et
∘ un deuxième mode de déshumidification, dérivé du mode pompe à chaleur et où le flux d'air intérieur (100) est refroidi puis réchauffé avant d'arriver dans l'habitacle,
**caractérisé en ce que** le circuit de climatisation inversible (1) comporte une unité centrale de contrôle (40) apte à piloter le passage d'un mode de fonctionnement à un autre selon une trame de transition de mode qui passe :
° dans un premier sens, par le mode de refroidissement, le premier mode de déshumidification, le deuxième mode de déshumidification, puis par le mode pompe à chaleur, et
∘ dans un deuxième sens, par le mode pompe à chaleur, le deuxième mode de déshumidification, le premier mode de déshumidification, puis par le mode de refroidissement.

2. Procédé de gestion selon la revendication 1, **caractérisé en ce que** l'unité centrale de contrôle (40) est apte à piloter le compresseur (3) et que, afin de passer d'un mode de fonctionnement à un autre dans le deuxième sens de la trame de transition, l'unité centrale de contrôle (40) mesure et calcule la différence de pression du fluide réfrigérant de part et d'autre des vannes d'arrêt entrant enjeu dans le changement de mode de fonctionnement,
si cette différence de pression est inférieure à un seuil prédéterminé, l'unité centrale de contrôle (40) peut piloter le passage d'un mode de fonctionnement à l'autre,
si cette différence de pression est supérieure au seuil prédéterminé, l'unité centrale de contrôle (40) pilote le compresseur (3) de sorte à diminuer ladite différence de pression.

3. Procédé de gestion selon la revendication précédente, **caractérisé en ce que** lors du passage d'un mode de fonctionnement à un autre, l'unité centrale de contrôle (40) commande dans un premier temps les vannes d'arrêt à ouvrir et dans un second temps les vannes d'arrêt à fermer.

4. Procédé de gestion selon l'une des revendications 2 ou 3, **caractérisé en ce que** le seuil prédéterminé de la différence de pression est de 4 bars.

5. Procédé de gestion selon l'une des revendications précédentes, **caractérisé en ce que**, le procédé de gestion comportant les étapes suivantes :
∘ réception par l'unité centrale de contrôle (40) d'une requête afin d'atteindre un mode de fonctionnement,
∘ si le mode de fonctionnement actuel diffère du mode de fonctionnement demandé, l'unité centrale de contrôle (40) vérifie la place du mode de fonctionnement demandé par rapport au mode de fonctionnement actuel dans la trame de transition et passe au mode de fonctionnement suivant dans ladite trame de transition, jusqu'à atteindre le mode de fonctionnement demandé.

6. Procédé de gestion selon l'une des revendications précédentes, **caractérisé en ce que** le circuit de climatisation inversible (1) comporte :
∘ une première boucle de fluide réfrigérant (A) comportant dans le sens de circulation du fluide réfrigérant :
▪ un compresseur (3),
▪ un échangeur de chaleur bifluide (5),
▪ un premier dispositif de détente (7),
▪ un premier échangeur de chaleur (9) destiné à être traversé par un flux d'air intérieur (100),
▪ un deuxième dispositif de détente (11),
▪ un deuxième échangeur de chaleur (13) destiné à être traversé par un flux d'air extérieur (200), et
▪ une branche de contournement (30) du deuxième échangeur de chaleur (13) ledit circuit de climatisation inversible (1) comportant :
∘ une deuxième boucle de fluide caloporteur (B) comportant :
▪ l'échangeur de chaleur bifluide (5), ledit échangeur de chaleur bifluide étant agencé conjointement sur la première boucle de fluide réfrigérant (A) et sur la deuxième boucle de fluide caloporteur (B) de façon à permettre les échanges de chaleur entre la première boucle de fluide réfrigérant (A) et la deuxième boucle de fluide caloporteur (B),
▪ un troisième échangeur de chaleur (54) destiné à être traversé par le flux d'air intérieur (100), et
▪ un quatrième échangeur de chaleur (64) destiné à être traversé par un flux d'air extérieur (200),
le procédé de gestion étant de plus **caractérisé en ce que**,
lors du mode de refroidissement :
▪ le fluide réfrigérant passe successivement dans le compresseur (3) où il passe à haute pression, l'échangeur de chaleur bifluide (5), le premier dispositif de détente (7) où il passe à basse pression, le premier échangeur de chaleur (9) et dans la branche de contournement (30) avant de rejoindre le compresseur (3),
▪ les échanges d'énergie calorifique entre le fluide caloporteur et le flux d'air intérieur (100) sont bloqués et l'énergie calorifique évacuée au niveau du quatrième échangeur de chaleur (64) dans le flux d'air extérieur (200),
lors du mode pompe à chaleur :
▪ le fluide réfrigérant passe successivement dans le compresseur (3) où il passe à haute pression, l'échangeur de chaleur bifluide (5), le premier dispositif de détente (7) où il passe à une pression intermédiaire, le premier échangeur de chaleur (9), le deuxième dispositif de détente (11) où il passe à basse pression, et dans le deuxième échangeur de chaleur (13) avant de rejoindre le compresseur (3),
▪ les échanges d'énergie calorifique entre le fluide caloporteur et le flux d'air extérieur (200) sont bloqués et l'énergie calorifique évacuée au niveau du troisième échangeur de chaleur (54) dans le flux d'air intérieur (100),
le premier mode de déshumidification différant du mode de refroidissement
par le fait que le fluide caloporteur peut évacuer de l'énergie calorifique également au niveau du troisième échangeur de chaleur (54) dans le flux d'air intérieur (100), et
le deuxième mode de déshumidification différant du mode pompe à chaleur
par le fait que :
▪ le fluide réfrigérant traverse le premier dispositif de détente (7) où il passe à basse pression et traverse le deuxième dispositif de détente (11) sans perte de pression.

7. Procédé de gestion selon les revendications 2 à 4 en combinaison avec la revendication 6, **caractérisé en ce que** le circuit de climatisation inversible (1) comporte, reliés à ladite unité centrale de contrôle (40) :
∘ un capteur de pression (43) du fluide réfrigérant à pression intermédiaire, disposé en aval du premier échangeur de chaleur (9), entre ledit premier échangeur de chaleur (9) et la branche de contournement (30), et
∘ un capteur de pression (44) du fluide réfrigérant à basse pression, disposé en aval du deuxième échangeur de chaleur (13), entre ledit deuxième échangeur de chaleur (13) et le compresseur (3),
et que, afin de passer d'un mode de fonctionnement à un autre dans le deuxième sens de la trame de transition, l'unité centrale de contrôle (40) mesure et calcule la différence de pression du fluide réfrigérant entre la pression mesurée au niveau du capteur de pression (43) du fluide réfrigérant à pression intermédiaire et du capteur de pression (44) du fluide réfrigérant à basse pression.

8. Procédé de gestion selon l'une des revendications 6 ou 7, **caractérisé en ce que** lors du passage du deuxième mode de déshumidification au mode pompe à chaleur, le flux d'air intérieur (100) est redirigé au moyen d'un dispositif de chauffage, ventilation et climatisation vers la partie inférieure ou médiane de l'habitacle.

9. Procédé de gestion selon l'une des revendications 6 ou 7, **caractérisé en ce que** :
∘ lors du passage du premier mode déshumidification au deuxième mode de déshumidification,
▪ dans un premier temps, une première vanne d'arrêt (22), disposée en amont du deuxième dispositif de détente (11) est ouverte et une vanne d'arrêt (25) de contournement du deuxième dispositif de détente (11) est ouverte, de sorte que le fluide réfrigérant puisse contourner le deuxième dispositif de détente (11), ou ledit deuxième dispositif de détente (11) est ouvert complètement de sorte que le fluide réfrigérant puisse le traverser sans perte de pression, et
▪ dans un deuxième temps une deuxième vanne d'arrêt (33), disposée sur la branche de contournement (30), est fermée,
∘ lors du passage du deuxième mode déshumidification au premier mode de déshumidification,
▪ dans un premier temps la deuxième vanne d'arrêt (33) est ouverte, et
▪ dans un deuxième temps, la première vanne d'arrêt (22) est fermée ou la vanne d'arrêt (25) de contournement et le deuxième dispositif de détente (11) sont fermés.

10. Procédé de gestion selon l'une des revendications 6 ou 7, **caractérisé en ce que** :
∘ lors du passage du deuxième mode déshumidification au mode pompe à chaleur, une vanne d'arrêt (25) de contournement, disposée sur une conduite de dérivation (A') dudit deuxième dispositif de détente (11) est fermée,
∘ lors du passage du mode pompe à chaleur au deuxième mode de déshumidification, la vanne d'arrêt (25) de contournement est ouverte ou ledit deuxième dispositif de détente (11) est ouvert complètement de sorte que le fluide réfrigérant puisse le traverser sans perte de pression.

## Patentansprüche

1. Verfahren zur Verwaltung eines umkehrbaren Klimatisierungskreislaufs (1), wobei der Kreislauf arbeiten kann gemäß:
∘ einem Kühlmodus, bei dem ein für den Fahrzeuginnenraum bestimmter Innenluftstrom (100) gekühlt wird, wobei die vom Innenluftstrom (100) wiedergewonnene Wärmeenergie in einen Luftstrom (200) außerhalb des Kraftfahrzeugs ausgestoßen wird,
∘ einem ersten Entfeuchtungsmodus, abgeleitet vom Kühlmodus und bei dem der Innenluftstrom (100) gekühlt und dann wiedererwärmt wird, ehe er im Fahrzeuginnenraum ankommt,
∘ einem Wärmepumpenmodus, bei dem der Innenluftstrom (100) erwärmt wird, wobei die den Innenluftstrom (100) erwärmende Wärmeenergie aus dem Außenluftstrom (200) gewonnen wird, und
∘ einem zweiten Entfeuchtungsmodus, abgeleitet vom Wärmepumpenmodus und bei dem der Innenluftstrom (100) gekühlt und dann wiedererwärmt wird, ehe er im Fahrzeuginnenraum ankommt,
**dadurch gekennzeichnet, dass** der umkehrbare Klimatisierungskreislauf (1) eine zentrale Kontrolleinheit (40) aufweist, die den Übergang von einem Betriebsmodus in einen anderen gemäß einem Modusübergangsrahmen steuern kann, der verläuft:
∘ in einer ersten Richtung über den Kühlmodus, den ersten Entfeuchtungsmodus, den zweiten Entfeuchtungsmodus, dann über den Wärmepumpenmodus, und
∘ in einer zweiten Richtung über den Wärmepumpenmodus, den zweiten Entfeuchtungsmodus, den ersten Entfeuchtungsmodus, dann über den Kühlmodus.

2. Verwaltungsverfahren nach Anspruch 1, **dadurch gekennzeichnet, dass** die zentrale Kontrolleinheit (40) den Kompressor (3) steuern kann und dass, um von einem Betriebsmodus in einen anderen in der zweiten Richtung des Übergangsrahmens überzugehen, die zentrale Kontrolleinheit (40) die Druckdifferenz des Kühlmittels zu beiden Seiten der Absperrschieber misst und berechnet, die beim Ändern des Betriebsmodus in Aktion treten, wenn diese Druckdifferenz niedriger als eine vorbestimmte Schwelle ist, kann die zentrale Kontrolleinheit (40) den Übergang von einem Betriebsmodus zum anderen steuern, wenn diese Druckdifferenz höher als die vorbestimmte Schwelle ist, steuert die zentrale Kontrolleinheit (40) den Kompressor (3) derart, dass die Druckdifferenz verringert wird.

3. Verwaltungsverfahren nach dem vorhergehenden Anspruch, **dadurch gekennzeichnet, dass** beim Übergang von einem Betriebsmodus in einen anderen die zentrale Kontrolleinheit (40) zuerst die Absperrschieber in Öffnungsrichtung und dann die Absperrschieber in Schließrichtung steuert.

4. Verwaltungsverfahren nach einem der Ansprüche 2 oder 3, **dadurch gekennzeichnet, dass** die vorbestimmte Schwelle der Druckdifferenz 4 Bar beträgt.

5. Verwaltungsverfahren nach einem der vorhergehenden Ansprüche, **dadurch gekennzeichnet, dass** das Verwaltungsverfahren die folgenden Schritte aufweist:
∘ Empfang durch die zentrale Kontrolleinheit (40) einer Anforderung, um einen Betriebsmodus zu erreichen,
∘ wenn der aktuelle Betriebsmodus sich vom angeforderten Betriebsmodus unterscheidet, überprüft die zentrale Kontrolleinheit (40) die Stelle des angeforderten Betriebsmodus bezüglich des aktuellen Betriebsmodus im Übergangsrahmen und geht in den folgenden Betriebsmodus im Übergangsrahmen über, bis der angeforderte Betriebsmodus erreicht wird.

6. Verwaltungsverfahren nach einem der vorhergehenden Ansprüche, **dadurch gekennzeichnet, dass** der umkehrbare Klimatisierungskreislauf (1) aufweist:
∘ eine erste Kühlmittelschleife (A), die in Umwälzrichtung des Kühlmittels aufweist:
• einen Kompressor (3),
• einen Zweifluid-Wärmetauscher (5),
• eine erste Expansionsvorrichtung (7),
• einen ersten Wärmetauscher (9), der dazu bestimmt ist, von einem Innenluftstrom (100) durchströmt zu werden,
• eine zweite Expansionsvorrichtung (11),
• einen zweiten Wärmetauscher (13), der dazu bestimmt ist, von einem Außenluftstrom (200) durchströmt zu werden, und
• einen Umgehungszweig (30) des zweiten Wärmetauschers (13),
wobei der umkehrbare Klimatisierungskreislauf (1) aufweist:
∘ eine zweite Wärmeträgerschleife (B), die aufweist:
• den Zweifluid-Wärmetauscher (5), wobei der Zweifluid-Wärmetauscher gleichzeitig auf der ersten Kühlmittelschleife (A) und auf der zweiten Wärmeträgerschleife (B) angeordnet ist, um die Wärmeaustauschvorgänge zwischen der ersten Kühlmittelschleife (A) und der zweiten Wärmeträgerschleife (B) zu erlauben,
• einen dritten Wärmetauscher (54), der dazu bestimmt ist, vom Innenluftstrom (100) durchströmt zu werden, und
• einen vierten Wärmetauscher (64), der dazu bestimmt ist, von einem Außenluftstrom (200) durchströmt zu werden,
wobei das Verwaltungsverfahren außerdem **dadurch gekennzeichnet ist, dass** im Kühlmodus:
• das Kühlmittel nacheinander in den Kompressor (3), wo es auf hohen Druck übergeht, den Zweifluid-Wärmetauscher (5), die erste Expansionsvorrichtung (7), wo es auf niedrigen Druck übergeht, den ersten Wärmetauscher (9) und in den Umgehungszweig (30) geht, ehe es wieder zum Kompressor (3) kommt,
• die Austauschvorgänge von Wärmeenergie zwischen dem Wärmeträger und dem Innenluftstrom (100) blockiert sind und die Wärmeenergie im Bereich des vierten Wärmetauschers (64) in den Außenluftstrom (200) abgeführt wird,
im Wärmepumpenmodus:
• das Kühlmittel nacheinander in den Kompressor (3), wo es auf hohen Druck übergeht, den Zweifluid-Wärmetauscher (5), die erste Expansionsvorrichtung (7), wo es auf einen Zwischendruck übergeht, den ersten Wärmetauscher (9), die zweite Expansionsvorrichtung (11), wo es auf niedrigen Druck übergeht, und in den zweiten Wärmetauscher (13) geht, ehe es wieder zum Kompressor (3) kommt,
• die Austauschvorgänge von Wärmeenergie zwischen dem Wärmeträger und dem Außenluftstrom (200) blockiert sind und die Wärmeenergie im Bereich des dritten Wärmetauschers (54) in den Innenluftstrom (100) abgeführt wird,
wobei der erste Entfeuchtungsmodus sich vom Kühlmodus dadurch unterscheidet, dass der Wärmeträger Wärmeenergie ebenfalls im Bereich des dritten Wärmetauschers (54) in den Innenluftstrom (100) abführen kann, und der zweite Entfeuchtungsmodus sich vom Wärmepumpenmodus dadurch unterscheidet, dass:
• das Kühlmittel die erste Expansionsvorrichtung (7) durchströmt, wo es auf niedrigen Druck übergeht, und die zweite Expansionsvorrichtung (11) ohne Druckverlust durchströmt.

7. Verwaltungsverfahren nach den Ansprüchen 2 bis 4 in Kombination mit Anspruch 6, **dadurch gekennzeichnet, dass** der umkehrbare Klimatisierungskreislauf (1) mit der zentralen Kontrolleinheit (40) verbunden aufweist:
∘ einen Drucksensor (43) des Kühlmittels auf Zwischendruck, der hinter dem ersten Wärmetauscher (9) zwischen dem ersten Wärmetauscher (9) und dem Umgehungszweig (30) angeordnet ist, und
∘ einen Drucksensor (44) des Kühlmittels auf niedrigem Druck, der hinter dem zweiten Wärmetauscher (13) zwischen dem zweiten Wärmetauscher (13) und dem Kompressor (3) angeordnet ist,
und dass, um von einem Betriebsmodus zu einem anderen in der zweiten Richtung des Übergangsrahmens überzugehen, die zentrale Kontrolleinheit (40) die Druckdifferenz des Kühlmittels zwischen dem im Bereich des Drucksensors (43) des Kühlmittels auf Zwischendruck und des Drucksensors (44) des Kühlmittels auf niedrigem Druck gemessenen Druck misst und berechnet.

8. Verwaltungsverfahren nach einem der Ansprüche 6 oder 7, **dadurch gekennzeichnet, dass** beim Übergang vom zweiten Entfeuchtungsmodus in den Wärmepumpenmodus der Innenluftstrom (100) mittels einer Heiz-, Lüftungs- und Klimatisierungsvorrichtung zum unteren oder mittleren Teil des Fahrzeuginnenraums umgeleitet wird.

9. Verwaltungsverfahren nach einem der Ansprüche 6 oder 7, **dadurch gekennzeichnet, dass**:
∘ beim Übergang vom ersten Entfeuchtungsmodus in den zweiten Entfeuchtungsmodus
• zuerst ein erster Absperrschieber (22), der vor der zweiten Expansionsvorrichtung (11) angeordnet ist, geöffnet wird, und ein Absperrschieber (25) zur Umgehung der zweiten Expansionsvorrichtung (11) geöffnet wird, damit das Kühlmittel die zweite Expansionsvorrichtung (11) umgehen kann, oder die zweite Expansionsvorrichtung (11) vollständig geöffnet wird, damit das Kühlmittel sie ohne Druckverlust durchströmen kann, und
• dann ein zweiter Absperrschieber (33), der auf dem Umgehungszweig (30) angeordnet ist, geschlossen wird,
∘ beim Übergang vom zweiten Entfeuchtungsmodus in den ersten Entfeuchtungsmodus
• zuerst der zweite Absperrschieber (33) geöffnet wird, und
• dann der erste Absperrschieber (22) geschlossen wird oder der Umgehungs-Absperrschieber (25) oder die zweite Expansionsvorrichtung (11) geschlossen werden.

10. Verwaltungsverfahren nach einem der Ansprüche 6 oder 7, **dadurch gekennzeichnet, dass**:
∘ beim Übergang vom zweiten Entfeuchtungsmodus in den Wärmepumpenmodus ein Umgehungs-Absperrschieber (25), der auf einer Abzweigleitung (A') der zweiten Expansionsvorrichtung (11) angeordnet ist, geschlossen wird,
∘ beim Übergang vom Wärmepumpenmodus in den zweiten Entfeuchtungsmodus der Umgehungs-Absperrschieber (25) geöffnet wird oder die zweite Expansionsvorrichtung (11) vollständig geöffnet wird, damit das Kühlmittel sie ohne Druckverlust durchströmen kann.

## Claims

1. Method for managing a reversible air conditioning circuit (1), said circuit being able to operate according to:
∘ a cooling mode in which an internal air flow (100) intended for the car interior is cooled, the heat energy recovered from the internal air flow (100) being discharged into an air flow (200) external to the motor vehicle,
∘ a first dehumidifying mode, stemming from the cooling mode and in which the internal air flow (100) is cooled and then heated up before arriving in the car interior,
∘ a heat pump mode in which the internal air flow (100) is heated up, the heat energy heating up the internal air flow (100) being recovered from the external air flow (200), and
∘ a second dehumidifying mode, stemming from the heat pump mode and in which the internal air flow (100) is cooled and then heated up before arriving in the car interior,
**characterized in that** the reversible air conditioning circuit (1) includes a central control unit (40) suitable for controlling the passage from one operating mode to another according to a mode transition model which passes:
∘ in a first direction, through the cooling mode, the first dehumidifying mode, the second dehumidifying mode, then through the heat pump mode, and
∘ in a second direction, through the heat pump mode, the second dehumidifying mode, the first dehumidifying mode, then through the cooling mode.

2. Managing method according to Claim 1, **characterized in that** the central control unit (40) can control the compressor (3) and, in order to pass from one operating mode to another in the second direction of the transition model, the central control unit (40) measures and calculates the pressure difference of the refrigerant on either side of the stop valves involved in the change of operating mode,
if this pressure difference is less than a predetermined threshold, the central control unit (40) can control the passage from one operating mode to the other,
if this pressure difference is greater than the predetermined threshold, the central control unit (40) controls the compressor (3) such as to reduce said pressure difference.

3. Managing method according to the preceding claim, **characterized in that**, when passing from one operating mode to another, the central control unit (40) commands firstly the stop valves to be opened and secondly the stop valves to be closed.

4. Managing method according to one of Claims 2 or 3, **characterized in that** the predetermined threshold of the pressure difference is 4 bar.

5. Managing method according to one of the preceding claims, **characterized in that** the managing method includes the following steps:
∘ the central control unit (40) receives a request to reach an operating mode,
∘ if the current operating mode differs from the requested operating mode, the central control unit (40) verifies the position of the requested operating mode with respect to the current operating mode in the transition model and passes to the following operating mode in said transition model, until the requested operating mode is reached.

6. Managing method according to one of the preceding claims, **characterized in that** the reversible air conditioning circuit (1) includes:
∘ a first refrigerant loop (A) including, in the circulating direction of the refrigerant:
▪ a compressor (3),
▪ a two-fluid heat exchanger (5),
▪ a first expansion device (7),
▪ a first heat exchanger (9) intended to be crossed by an internal air flow (100),
▪ a second expansion device (11),
▪ a second heat exchanger (13) intended to be crossed by an external air flow (200), and
▪ a branch (30) for circumventing the second heat exchanger (13), said reversible air conditioning circuit (1) including:
∘ a second heat transfer fluid loop (B) including:
▪ the two-fluid heat exchanger (5), said two-fluid heat exchanger being arranged jointly on the first refrigerant loop (A) and on the second heat transfer fluid loop (B) such as to allow the exchanges of heat between the first refrigerant loop (A) and the second heat transfer fluid loop (B),
▪ a third heat exchanger (54) intended to be crossed by the internal air flow (100), and
▪ a fourth heat exchanger (64) intended to be crossed by an external air flow (200),
the managing method being further **characterized in that**, during the cooling mode:
▪ the refrigerant passes successively into the compressor (3) where it attains high pressure, the two-fluid heat exchanger (5), the first expansion device (7) where it attains low pressure, the first heat exchanger (9) and into the circumventing branch (30) before returning to the compressor (3),
▪ the exchanges of heat energy between the heat transfer fluid and the internal air flow (100) are blocked and the heat energy is evacuated at the fourth heat exchanger (64) into the external air flow (200),
during the heat pump mode:
▪ the refrigerant passes successively into the compressor (3) where it attains high pressure, the two-fluid heat exchanger (5), the first expansion device (7) where it attains intermediate pressure, the first heat exchanger (9), the second expansion device (11) where it attains low pressure, and into the second heat exchanger (13) before returning to the compressor (3),
▪ the exchanges of heat energy between the heat transfer fluid and the external air flow (200) are blocked and the heat energy is evacuated at the third heat exchanger (54) into the internal air flow (100),
the first dehumidifying mode differing from the cooling mode **in that** the heat transfer fluid can evacuate heat energy also at the third heat exchanger (54) into the internal air flow (100), and
the second dehumidifying mode differing from the heat pump mode **in that**:
▪ the refrigerant passes through the first expansion device (7) where it attains low pressure and passes through the second expansion device (11) without loss of pressure.

7. Managing method according to Claims 2 to 4 in combination with Claim 6, **characterized in that** the reversible air conditioning circuit (1) includes, linked to said central control unit (40) :
∘ a pressure sensor (43) for the intermediate-pressure refrigerant, placed downstream of the first heat exchanger (9), between said first heat exchanger (9) and the circumventing branch (30), and
∘ a pressure sensor (44) for the low-pressure refrigerant, placed downstream of the second heat exchanger (13), between said second heat exchanger (13) and the compressor (3),
and **in that**, in order to pass from one operating mode to another in the second direction of the transition model, the central control unit (40) measures and calculates the pressure difference of the refrigerant between the pressure measured at the pressure sensor (43) for the intermediate-pressure refrigerant and at the pressure sensor (44) for the low-pressure refrigerant.

8. Managing method according to one of Claims 6 or 7, **characterized in that**, when passing from the second dehumidifying mode to the heat pump mode, the internal air flow (100) is redirected by means of a heating, ventilating and air conditioning device toward the lower or middle part of the car interior.

9. Managing method according to one of Claims 6 or 7, **characterized in that**:
∘ when passing from the first dehumidifying mode to the second dehumidifying mode,
▪ firstly, a first stop valve (22), placed upstream of the second expansion valve (11) is opened and a stop valve (25) for circumventing the second expansion device (11) is opened, such that the refrigerant can circumvent the second expansion device (11), or said second expansion device (11) is completely opened such that the refrigerant can pass through it without loss of pressure, and
▪ secondly, a second stop valve (33), placed on the circumventing branch (30), is closed,
∘ when passing from the second dehumidifying mode to the first dehumidifying mode,
▪ firstly, the second stop valve (33) is opened, and
▪ secondly, the first stop valve (22) is closed or the circumventing stop valve (25) and the second expansion device (11) are closed.

10. Managing method according to one of Claims 6 or 7, **characterized in that**:
∘ when passing from the second dehumidifying mode to the heat pump mode, a circumventing stop valve (25), placed on a pipe (A') for bypassing said second expansion device (11) is closed,
∘ when passing from the heat pump mode to the second dehumidifying mode, the circumventing stop valve (25) is opened or said second expansion device (11) is completely opened such that the refrigerant can pass through it without loss of pressure.
